# EUROPEAN PATENT APPLICATION

(11) **EP 4 579 921 A1**
(43) Date of publication of application: **02.07.2025**
(21) Application number: 23925772.8
(22) Date of filing: 09.03.2023
(51) Int. Cl.: H01M 50/40, H01M 50/457

(54) **SEPARATOR, BATTERY CELL, BATTERY AND ELECTRIC DEVICE**

(71) Applicant: Contemporary Amperex Technology (Hong Kong) Limited, Central (HK)
(72) Inventor: LING, Yuexia, Ningde, Fujian 352100 (CN); FAN, Yulei, Ningde, Fujian 352100 (CN); LIU, Feng, Ningde, Fujian 352100 (CN); GUAN, Wenhao, Ningde, Fujian 352100 (CN); ZHONG, Wei, Ningde, Fujian 352100 (CN); GE, Xiaoming, Ningde, Fujian 352100 (CN)
(74) Representative: Gong, Jinping
(86) International application number: PCT/CN2023/080469
(87) International publication number: WO 2024/183054

(57) **Abstract**

This application provides a separator, a battery cell, a battery, and a power consuming apparatus. The separator includes a first porous substrate, a second porous substrate, and a first functional layer located between the first porous substrate and the second porous substrate. The first functional layer includes graphene oxide, and the first functional layer is provided with a through hole penetrating in a thickness direction of the first functional layer.

## Description

### TECHNICAL FIELD

This application relates to a separator, a battery cell, a battery, and a power consuming apparatus.

### BACKGROUND

In recent years, batteries have been widely used in energy storage power supply systems such as water power stations, thermal power stations, wind power stations, and solar power stations, and in a plurality of fields such as consumer electronics, electric tools, electric bicycles, electric motorcycles, electric vehicles, military equipment, and aerospace. With the application and promotion of batteries, the reliability of batteries has received more and more attention. During the charging and discharging of a battery, the problem of dendrites on a negative electrode is one of the important reasons affecting the reliability of the battery. How to slow down dendrite growth without affecting the normal use of the battery is a technical problem to be solved urgently at present. The foregoing statement is merely intended to provide background information related to this application, and does not necessarily constitute the prior art.

### SUMMARY

This application provides a separator, a battery cell, a battery, and a power consuming apparatus, which can provide a battery with good cycle performance.

A first aspect of this application provides a separator, including a first porous substrate, a second porous substrate, and a first functional layer located between the first porous substrate and the second porous substrate, where the first functional layer includes graphene oxide, and the first functional layer is provided with a through hole penetrating in a thickness direction of the first functional layer.

The separator provided in embodiments of this application has a multilayer structure. The first functional layer is located between the first porous substrate and the second porous substrate. The first functional layer includes the graphene oxide. The graphene oxide can react with dendrites that pierce a porous substrate on a negative electrode side to slow down dendrite growth, thereby reducing a probability of an internal short circuit of a battery caused by dendrites piercing a porous substrate on a positive electrode side. The separator provided in the embodiments of this application has good high-temperature resistance, a high mechanical strength, and good electrolyte solution wettability and retentivity. The separator provided in the embodiments of this application has a stable structure and is not prone to problems such as powder falling.

The first functional layer of the separator provided in the embodiments of this application is further provided with the through hole penetrating in the thickness direction of the first functional layer, which can fully exert effects of the graphene oxide in improving the high-temperature resistance, mechanical strength, and electrolyte solution wettability and retentivity of the separator and slowing down dendrite growth, and provide the separator with good air permeability and high ion transport capacity. Further, the separator provided in the embodiments of this application can reduce the probability of an internal short circuit of the battery, and provide the battery with good cycle performance.

In any embodiment of this application, a thickness of the first functional layer is less than or equal to 10 µm, and optionally ranges from 0.5 µm to 5 µm. When the thickness of the first functional layer is within the foregoing range, the effects of the graphene oxide in improving the high-temperature resistance, mechanical strength, and electrolyte solution wettability and retentivity of the separator and slowing down dendrite growth can be fully exerted, and energy density of the battery can be kept from being affected due to an excessive weight increase of the separator. In addition, when the thickness of the first functional layer is within the foregoing range, the separator can also have good air permeability and high ion transport capacity, thereby helping to improve the cycle performance of the battery.

In any embodiment of this application, a ratio of a total area of the through hole to a total area of the first functional layer ranges from (0.50 to 0.85): 1, and optionally ranges from (0.60 to 0.82): 1. When the ratio of the total area of the through hole to the total area of the first functional layer is within the foregoing range, the effects of the graphene oxide in improving the high-temperature resistance, mechanical strength, and electrolyte solution wettability and retentivity of the separator and slowing down dendrite growth can be fully exerted, and the separator can be provided with good air permeability and high ion transport capacity. Further, the separator provided in the embodiments of this application can reduce the probability of an internal short circuit of the battery, and provide the battery with better cycle performance.

In any embodiment of this application, the through hole has a continuous pattern, and optionally, the continuous pattern is a reciprocating bending pattern.

In any embodiment of this application, a plurality of through holes are provided and are distributed discretely, and optionally, the plurality of through holes are distributed in a discrete array.

In any embodiment of this application, a hole spacing between two adjacent through holes ranges from 0.5 µm to 10 µm, and optionally ranges from 0.7 µm to 5 µm. When the hole spacing between two adjacent through holes is within the foregoing range, in one aspect, the separator can have good air permeability and high ion transport capacity, thereby further reducing an internal resistance of the battery and improving the cycle performance of the battery. In another aspect, a hole blockage problem caused by powder or particles formed due to breakage of the first functional layer can be reduced.

In any embodiment of this application, an equivalent circular diameter of the through hole ranges from 5 µm to 25 µm, and optionally ranges from 8 µm to 17 µm. When the equivalent circular diameter of the through hole is within the foregoing range, in one aspect, the separator can have good air permeability and high ion transport capacity, thereby further reducing the internal resistance of the battery and improving the cycle performance of the battery. In another aspect, dendrite growth can be better slowed down, so that the probability of an internal short circuit of the battery can be further reduced.

In any embodiment of this application, a pattern of the through hole includes one or more of a circle, an ellipse, an oblong, a polygon, a sector, an I shape, and a motif.

In any embodiment of this application, a volume distribution particle size Dv50 of the graphene oxide ranges from 0.01 µm to 5 µm, and optionally ranges from 0.05 µm to 3 µm.

In any embodiment of this application, the graphene oxide has a lamellar structure.

In any embodiment of this application, a thickness of a sheet of the graphene oxide is less than or equal to 4 nm, and optionally ranges from 1 nm to 2 nm. When the volume distribution particle size Dv50 of the graphene oxide is within the foregoing range, viscosity of slurry is moderate, which helps to form a uniform first functional layer and reduce powder falling in a coating process, and a probability of the hole blockage problem can be reduced, so that the separator can have good air permeability and high ion transport capacity, and the battery has better cycle performance.

In any embodiment of this application, a thickness ratio of the first porous substrate to the first functional layer ranges from 1:(0.1 to 0.9), and optionally ranges from 1:(0.1 to 0.5).

In any embodiment of this application, a thickness ratio of the second porous substrate to the first functional layer ranges from 1:(0.1 to 0.9), and optionally ranges from 1:(0.1 to 0.5).

In any embodiment of this application, a thickness of the first porous substrate ranges from 2 µm to 15 µm, and optionally ranges from 3 µm to 10 µm.

In any embodiment of this application, a thickness of the second porous substrate ranges from 2 µm to 15 µm, and optionally ranges from 3 µm to 10 µm.

In any embodiment of this application, a thickness ratio of the first porous substrate to the second porous substrate ranges from (0.8 to 1.05):(0.8 to 1.06), and optionally ranges from (0.9 to 1.03):(0.9 to 1.04).

Through the further adjustment of the thickness of the first porous substrate and/or the thickness of the second porous substrate, the separator is provided with both a high mechanical strength and a high bonding strength, and the separator is also provided with good air permeability and high ion transport capacity.

In any embodiment of this application, a total thickness of the separator ranges from 5 µm to 25 µm, and optionally ranges from 8 µm to 18 µm. This helps to provide the separator with a high mechanical strength, good air permeability, and high ion transport capacity.

In any embodiment of this application, the first functional layer further includes a non-particle binder. Optionally, the non-particle binder includes one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyvinyl alcohol, polyacrylic acid, polyurethane, carboxymethyl cellulose, and styrene-butadiene rubber emulsion.

In any embodiment of this application, content of the non-particle binder in the first functional layer ranges from 2% to 15%, and optionally ranges from 3% to 10%, based on a total weight of the first functional layer.

In any embodiment of this application, the first functional layer further includes first inorganic particles. The first inorganic particles can reduce a degree of mutual stacking between microsheets of the graphene oxide, thereby helping to further improve the air permeability of the separator and further improve the ion transport capacity of the separator.

In any embodiment of this application, the first inorganic particles include one or more of inorganic particles capable of transporting active ions and inorganic particles having a dielectric constant of 5 or more.

In any embodiment of this application, a volume distribution particle size Dv50 of the first inorganic particles ranges from 0.2 µm to 5 µm, and more optionally ranges from 1 µm to 3 µm. The volume distribution particle size Dv50 of the first inorganic particles being within the foregoing range helps to further reduce the degree of mutual stacking between the microsheets of the graphene oxide, thereby helping to further improve the air permeability of the separator and further improve the ion transport capacity of the separator. In addition, the probability of the hole blockage problem due to powder falling in the coating process can also be reduced, so that the battery can have better cycle performance.

In any embodiment of this application, content of the first inorganic particles in the first functional layer ranges from 2% to 15%, and optionally ranges from 5% to 10%, based on the total weight of the first functional layer.

In any embodiment of this application, the through hole is obtained by one or more of a phase separation process, a photoetching process, and a plasma etching process.

In any embodiment of this application, the through hole is obtained by an etching process using laser light.

In any embodiment of this application, a wavelength of the laser light ranges from 100 nm to 2000 nm, and optionally ranges from 300 nm to 1500 nm.

In any embodiment of this application, a power of the laser light ranges from 1 W to 15 W, and optionally ranges from 2 W to 10 W.

In any embodiment of this application, a cutting speed of a spot of the laser light ranges from 20 mm/s to 70 mm/s, and optionally ranges from 40 mm/s to 60 mm/s.

In any embodiment of this application, a pulse width of a generator of the laser light ranges from 2 ps to 20 ps, and optionally ranges from 5 ps to 15 ps.

In any embodiment of this application, a light-emitting time of the laser light ranges from 2 ms/via to 6 ms/via.

Through the adjustment of one or more of the foregoing parameters of the laser light, the first functional layer can be provided with the through hole penetrating in the thickness direction of the first functional layer, and parameters such as the total area of the through hole and the pattern of the through hole can also be adjusted. In addition, through the adjustment of one or more of the foregoing parameters of the laser light, a possibility that high-energy laser light damages the first porous substrate and the second porous substrate can be further minimized.

In any embodiment of this application, the first porous substrate includes one or more of polyolefin, halogenated polyolefin, polyamide, polyester, and respective derivatives thereof.

In any embodiment of this application, the second porous substrate includes one or more of polyolefin, halogenated polyolefin, polyamide, polyester, and respective derivatives thereof.

In any embodiment of this application, the separator further includes a second functional layer located on the first porous substrate and/or a surface of the second porous substrate away from the first functional layer, and the second functional layer includes one or more of second inorganic particles and organic particles. This can improve at least one of the high-temperature resistance and bonding strength of the separator.

In any embodiment of this application, the second inorganic particles include one or more of inorganic particles capable of transporting active ions and inorganic particles having a dielectric constant of 5 or more.

In any embodiment of this application, the organic particles include one or more of polyvinylidene fluoride particles, polytetrafluoroethylene particles, vinylidene fluoride-tetrafluoroethylene-propylene terpolymer particles, vinylidene fluoride-hexafluoropropylene-tetrafluoroethylene terpolymer particles, and tetrafluoroethylene-hexafluoropropylene copolymer particles.

In any embodiment of this application, an ionic conductivity of the separator at 25°C ranges from 0.8 mS•cm⁻¹ to 2.8 mS•cm⁻¹, and optionally ranges from 1.0 mS•cm⁻¹ to 2.5 mS•cm⁻¹. The separator has a high ionic conductivity, which can improve the cycle performance of the battery.

In any embodiment of this application, an air resistance of the separator ranges from 100 s/100 ml to 400 s/100 ml, and optionally ranges from 120 s/100 ml to 200 s/100 ml. The separator has good air permeability, which can improve the cycle performance of the battery.

In any embodiment of this application, a tensile strength in a transverse direction of the separator is greater than or equal to 1000 kgf/cm², and optionally ranges from 1100 kgf/cm² to 1600 kgf/cm².

In any embodiment of this application, a tensile strength in a longitudinal direction of the separator is greater than or equal to 900 kgf/cm², and optionally ranges from 1000 kgf/cm² to 1600 kgf/cm².

The separator has high tensile strengths in both the transverse direction and the longitudinal direction, which can improve the reliability of the battery.

In any embodiment of this application, a puncture strength of the separator ranges from 9.0 N•µm⁻¹ to 15 N•µm⁻¹, and optionally ranges from 9.5 N•µm⁻¹ to 12 N•µm⁻¹. The separator has a high puncture strength, which can improve the reliability of the battery.

In any embodiment of this application, a porosity of the separator ranges from 40% to 80%, and optionally ranges from 45% to 76%. This helps to provide the separator with good air permeability and high ion transport capacity.

A second aspect of this application provides a battery cell, including the separator in the first aspect of this application.

In any embodiment of this application, the battery cell includes at least one of a lithium-ion battery cell, a sodium-ion battery cell, a lithium metal battery cell, a sodium metal battery cell, a lithium-sulfur battery cell, a sodium-sulfur battery cell, a lithium-air battery cell, and a sodium-air battery cell.

A third aspect of this application provides a battery, including the battery cell in the second aspect of this application and a box body accommodating the battery cell.

A fourth aspect of this application provides a power consuming apparatus, including the battery in the third aspect of this application.

The power consuming apparatus in this application includes the battery provided in this application, and therefore has at least the same advantages as the battery.

### BRIEF DESCRIPTION OF THE DRAWINGS

To describe the technical solutions of embodiments of this application more clearly, the following briefly describes the accompanying drawings for describing the embodiments of this application. Evidently, the drawings outlined below are merely a part of embodiments of this application. A person of ordinary skill in the art may derive other drawings from such drawings without making any creative efforts.
FIG. 1 is a schematic diagram of an embodiment of a battery cell according to this application.
FIG. 2 is a schematic exploded view of an embodiment of a battery cell according to this application.
FIG. 3 is a schematic diagram of an embodiment of a battery module according to this application.
FIG. 4 is a schematic diagram of an embodiment of a battery pack according to this application.
FIG. 5 is a schematic exploded view of an embodiment of a battery pack shown in FIG. 4.
FIG. 6 is a schematic diagram of an embodiment of a separator according to this application.
FIG. 7 is a schematic diagram of an embodiment of a first functional layer of a separator according to this application.
FIG. 8 is a schematic diagram of another embodiment of a first functional layer of a separator according to this application.
FIG. 9 is a schematic diagram of an embodiment of a power consuming apparatus including a battery of this application as a power source.

In the drawings, the components are not drawn to actual scale. Reference numerals are as follows: 1. battery pack; 2. upper box body; 3. lower box body; 4. battery module; 5. battery cell; 51. housing; 52. electrode assembly; 53. cover plate; 10. separator; 101. first porous substrate; 102. second porous substrate; 103. first functional layer; and 1031. through hole.

### DETAILED DESCRIPTION

Hereinafter, embodiments of a separator, a battery cell, a battery, and a power consuming apparatus of this application are specifically disclosed in the detailed description with reference to the accompanying drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions, and such technical solutions should be considered to be included in the disclosure of this application.

Unless otherwise specified, all technical features and optional technical features of this application may be combined with each other to form new technical solutions, and such technical solutions should be considered to be included in the disclosure of this application.

Unless otherwise specified, all steps of this application may be performed sequentially or randomly, and preferably sequentially. For example, the phrase "the method includes step (1) and step (2)" means that the method may include step (1) and step (2) performed sequentially, or may include step (2) and step (1) performed sequentially. For example, the phrase "the method may further include step (3)" means that step (3) may be added to the method in any order. For example, the method may include step (1), step (2), and step (3), or may include step (1), step (3), and step (2), or may include step (3), step (1), and step (2).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

Unless otherwise specified, in this application, the terms "first", "second", and the like are used to distinguish different objects, rather than to describe a specific order or primary -secondary relationship.

Unless otherwise stated, the ratio parameters involved in this application are all compared under the same unit. For example, an area ratio of A and B is 0.75:1, and in this case, the area units of A and B are the same.

Unless otherwise specified, the terms used in this application have well-known meanings as commonly understood by a person skilled in the art.

Unless otherwise stated, the values of the parameters mentioned in this application can be measured by various test methods commonly used in the art, for example, can be measured according to the test methods given in this application. Unless otherwise specified, the test temperature of the parameters is 25°C, and the test pressure is standard atmospheric pressure.

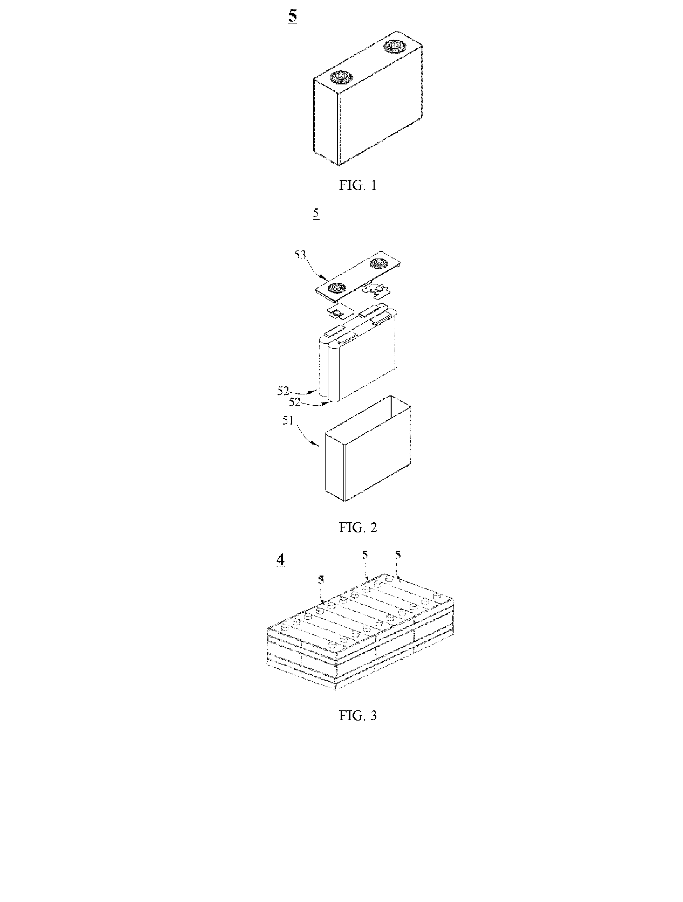

A battery mentioned in embodiments of this application is a single physical module including one or more battery cells to provide a higher voltage and higher capacity. For example, the battery provided in this application may include a battery cell, a battery module, or a battery pack. The battery cell is the smallest unit constituting the battery, and can achieve functions of charging and discharging independently. A shape of the battery cell is not particularly limited in this application, and may be a cylinder, a cuboid or any other shape. FIG. 1 shows a battery cell 5 of a cuboidal structure as an example. A plurality of battery cells may be connected in series or in parallel or in a manner of series-parallel connection, and the series-parallel connection is a mixture of serial connection and parallel connection. In the embodiments of this application, the plurality of battery cells may directly form a battery pack, or may first form battery modules, which then form a battery pack.

The battery generally includes a box body for packaging the one or more battery cells. The box body can prevent liquids or other foreign objects from affecting the charging or discharging of the battery cells. The box body may be a simple three-dimensional structure such as a single cuboid, a cylinder, or a sphere, or a complex three-dimensional structure formed by combining simple three-dimensional structures such as a cuboid, a cylinder, or a sphere, which is not limited in the embodiments of this application. A material of the box body may be aluminum alloy, iron alloy, or another alloy material, or polycarbonate, polyisocyanurate foam, or another polymer material, or a composite material of glass fiber and epoxy resin, which is also not limited in the embodiments of this application.

The battery cell mentioned in the embodiments of this application may be at least one of a lithium-ion battery cell, a sodium-ion battery cell, a lithium metal battery cell, a sodium metal battery cell, a lithium-sulfur battery cell, a sodium-sulfur battery cell, a lithium-air battery cell, a sodium-air battery cell, and the like, which is not limited in the embodiments of this application.

Dendrites mentioned in the embodiments of this application may be lithium dendrites, sodium dendrites, or the like.

The battery cell provided in the embodiments of this application includes an electrode assembly and an electrolyte. The electrode assembly may be a wound structure or a laminated structure, which is not limited in the embodiments of this application.

The battery cell may include an outer packaging. The outer packaging can be used for packaging the foregoing electrode assembly and electrolyte. The outer packaging may be a hard case, for example, a hard plastic case, an aluminum case, or a steel case. The outer packaging may alternatively be a soft pack, for example, a pouch type soft pack. The soft pack may be made from plastic, for example, one or more of polypropylene (PP), polybutylene terephthalate (PBT), and polybutylene succinate (PBS).

As shown in FIG. 2, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 is used for covering the opening to close the accommodating cavity. The electrode assembly 52 is packaged in the accommodating cavity. One or more electrode assemblies 52 may be included in the battery cell 5, which may be adjusted as required.

The battery cell may be assembled into a battery module, the battery module may include a plurality of battery cells, and a specific quantity of battery cells may be adjusted according to the application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the plurality of battery cells 5 may be arranged in any other manner. Further, the plurality of battery cells 5 may be fixed by a fastener.

The battery module 4 may further include a casing with an accommodating space, and the plurality of battery cells 5 are accommodated in the accommodating space.

The battery module may alternatively be assembled into a battery pack. A quantity of the battery modules included in the battery pack may be adjusted according to the application and capacity of the battery pack.

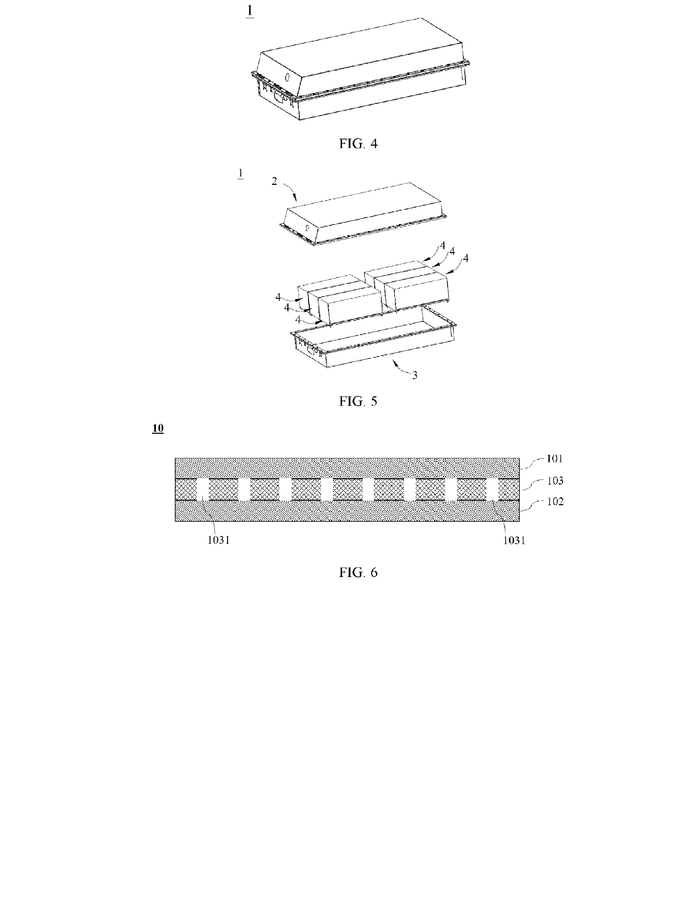

FIG. 4 and FIG. 5 are schematic diagrams of a battery pack 1 as an example. As shown in FIG. 4 and FIG. 5, the battery pack 1 may include a box body and a plurality of battery modules 4 disposed in the box body. The box body includes an upper box body 2 and a lower box body 3. The upper box body 2 is used for covering the lower box body 3 and form an enclosed space for accommodating the battery modules 4. The plurality of battery modules 4 may be arranged in the box body in any manner.

The electrode assembly includes a positive electrode plate, a negative electrode plate, and a separator. The separator is disposed between the positive electrode plate and the negative electrode plate to mainly prevent an internal short circuit. The performance of the separator, as an important component of the battery, is crucial to the performance of the battery. At present, the separator used in commercial batteries is usually a polyolefin porous film. However, the polyolefin porous film has poor electrolyte solution wettability and retentivity and thermal stability. In addition, as a quantity of charge-discharge processes of the battery increases, dendrites are formed on a negative electrode. The continuously growing dendrites may pierce the polyolefin porous film to cause an internal short circuit, and even cause safety accidents such as combustion and explosion in severe cases.

Separator modification is one of effective ways to improve the reliability of the battery and reduce a probability of an internal short circuit of the battery. At present, a generally adopted strategy is to provide an inorganic ceramic layer on a surface of a separator. However, the inorganic ceramic layer has a plurality of problems: first, the adhesion between the inorganic ceramic layer and the polyolefin porous film is poor, and a coating tends to fall off; and second, the inorganic ceramic layer has a limited inhibition effect on dendrites.

In view of this, the inventors have made improvements to the structure of a separator.

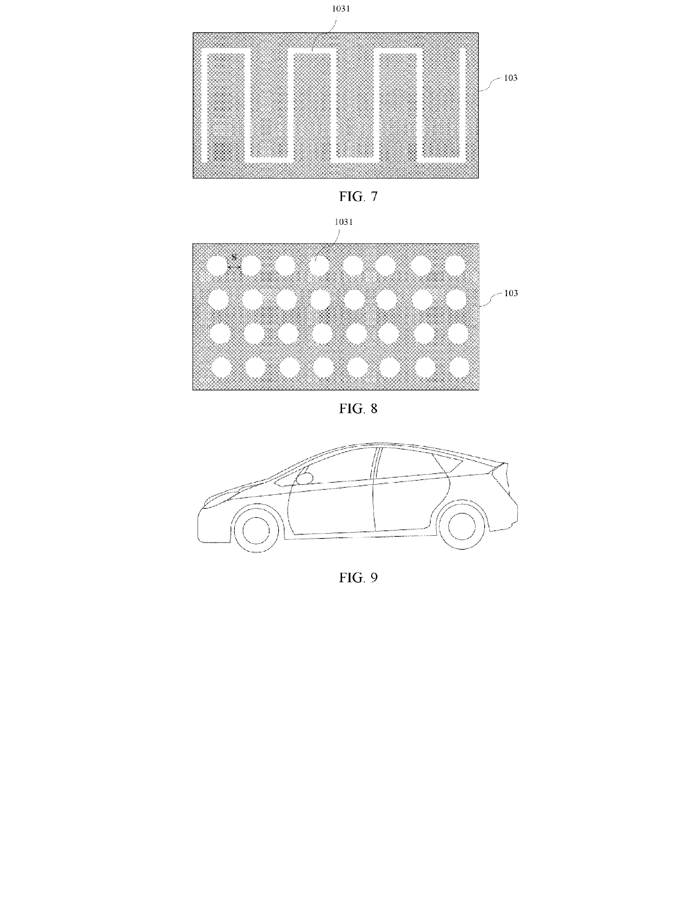

FIG. 6 is a schematic diagram of an embodiment of a separator according to this application. FIG. 7 is a schematic diagram of an embodiment of a first functional layer of a separator according to this application. FIG. 8 is a schematic diagram of another embodiment of a first functional layer of a separator according to this application.

As shown in FIG. 6 to FIG. 8, a separator 10 includes a first porous substrate 101, a second porous substrate 102, and a first functional layer 103 located between the first porous substrate 101 and the second porous substrate 102. The first functional layer 103 includes graphene oxide, and the first functional layer 103 is provided with a through hole 1031 penetrating in a thickness direction of the first functional layer 103.

The first functional layer is located between the first porous substrate and the second porous substrate, which can prevent the graphene oxide from directly contacting positive and negative electrodes, thereby reducing side reactions. Particularly, when the graphene oxide is in contact with the negative electrode, metal (for example, lithium metal) is continuously consumed, which reduces battery capacity and cycle life. In addition, compared with a conventional polyolefin separator, the separator provided in embodiments of this application has good high-temperature resistance and a high mechanical strength. Compared with a conventional separator coated with an inorganic ceramic layer, the separator provided in the embodiments of this application has a stable structure and is not prone to problems such as powder falling.

After repeated charging and discharging of a battery cell, dendrites are formed on a negative electrode. The continuously growing dendrites may pierce the separator to cause an internal short circuit, and even cause safety accidents such as combustion and explosion in severe cases. The first functional layer of the separator provided in the embodiments of this application includes the graphene oxide (GO). The graphene oxide is oxide of graphene, and contains a large quantity of oxygen-containing functional groups such as hydroxyl groups, carboxyl groups, and aldehyde groups on a surface thereof. The inventors find during research that the graphene oxide can react with dendrites that pierce a porous substrate on a negative electrode side to slow down dendrite growth, thereby effectively reducing a probability of an internal short circuit of a battery caused by dendrites piercing a porous substrate on a positive electrode side. Therefore, the first functional layer of the separator provided in the embodiments of this application can function as a barrier layer to reduce or even prevent dendrites from piercing the separator, thereby reducing the probability of an internal short circuit of the battery.

Lithium dendrites are used as an example. A reaction between the graphene oxide (GO) and the lithium dendrites may be:

graphene oxide (GO) + Li → reduced graphene oxide (r-GO) + Li⁺.

Sodium dendrites are used as an example. A reaction between the graphene oxide (GO) and the sodium dendrites may be:

graphene oxide (GO) + Na → reduced graphene oxide (r-GO) + Na⁺.

The porous substrates of the separator usually have strong hydrophobicity and poor affinity with an electrolyte solution with strong polarity, resulting in that electrolyte solution wettability and retentivity of the separator are not excellent enough. The first functional layer of the separator provided in the embodiments of this application includes the graphene oxide. The graphene oxide contains a large number of oxygen-containing functional groups, and these oxygen-containing functional groups have strong hydrophilicity, which can improve electrolyte solution wettability and retentivity of the separator, and improve cycle performance of the battery. In addition, the graphene oxide obtained by micro-oxidation treatment can also be compounded with the porous substrates of the separator by a van der Waals force, which can also reduce binder usage and improve the cycle performance of the battery.

The inventors also find during research that the graphene oxide swells and spreads easily in slurry. When the graphene oxide is coated on a porous substrate, microsheets of the graphene oxide are easily formed. The microsheets are stacked on each other, which reduces air permeability and a porosity of the separator and reduces ion channels, and results in a decrease in an ionic conductivity and an increase in an internal resistance, affecting the cycle performance and service life of the battery. The first functional layer of the separator provided in the embodiments of this application is provided with the through hole penetrating in the thickness direction of the first functional layer, which can provide the separator with good air permeability and high ion transport capacity, and further can provide the battery with good cycle performance.

Therefore, the separator provided in the embodiments of this application has a multilayer structure. The first functional layer is located between the first porous substrate and the second porous substrate. The first functional layer includes the graphene oxide. The graphene oxide can react with dendrites that pierce a porous substrate on a negative electrode side to slow down dendrite growth, thereby reducing a probability of an internal short circuit of a battery caused by dendrites piercing a porous substrate on a positive electrode side. The separator provided in the embodiments of this application has good high-temperature resistance, a high mechanical strength, and good electrolyte solution wettability and retentivity. The separator provided in the embodiments of this application has a stable structure and is not prone to problems such as powder falling.

The first functional layer of the separator provided in the embodiments of this application is further provided with the through hole penetrating in the thickness direction of the first functional layer, which can fully exert effects of the graphene oxide in improving the high-temperature resistance, mechanical strength, and electrolyte solution wettability and retentivity of the separator and slowing down dendrite growth, and provide the separator with good air permeability and high ion transport capacity. Further, the separator provided in the embodiments of this application can reduce the probability of an internal short circuit of the battery, and provide the battery with good cycle performance.

In some embodiments, a thickness of the first functional layer may be less than or equal to 10 µm. For example, the thickness of the first functional layer may be 0.5 µm, 0.6 µm, 0.7 µm, 0.8 µm, 0.9 µm, 1 µm, 1.5 µm, 2 µm, 3 µm, 4 µm, 5 µm, 6 µm, 7 µm, 8 µm, 9 µm, 10 µm, or a range formed by any of the foregoing values.

When the thickness of the first functional layer is within the foregoing range, the effects of the graphene oxide in improving the high-temperature resistance, mechanical strength, and electrolyte solution wettability and retentivity of the separator and slowing down dendrite growth can be fully exerted, and energy density of the battery can be kept from being affected due to an excessive weight increase of the separator. In addition, when the thickness of the first functional layer is within the foregoing range, the separator can also have good air permeability and high ion transport capacity, thereby helping to improve the cycle performance of the battery.

Optionally, the thickness of the first functional layer may range from 0.5 µm to 10 µm, 0.5 µm to 9 µm, 0.5 µm to 8 µm, 0.5 µm to 7 µm, 0.5 µm to 6 µm, 0.5 µm to 5 µm, 0.7 µm to 10 µm, 0.7 µm to 9 µm, 0.7 µm to 8 µm, 0.7 µm to 7 µm, 0.7 µm to 6 µm, 0.7 µm to 5 µm, 0.9 µm to 10 µm, 0.9 µm to 9 µm, 0.9 µm to 8 µm, 0.9 µm to 7 µm, 0.9 µm to 6 µm, 0.9 µm to 5 µm, 1 µm to 10 µm, 1 µm to 9 µm, 1 µm to 8 µm, 1 µm to 7 µm, 1 µm to 6 µm, 1 µm to 5 µm, 1.1 µm to 10 µm, 1.1 µm to 9 µm, 1.1 µm to 8 µm, 1.1 µm to 7 µm, 1.1 µm to 6 µm, 1.1 µm to 5 µm, or 1.1 µm to 3.5 µm.

In some embodiments, a ratio of a total area of the through hole to a total area of the first functional layer may range from (0.50-0.85):1. For example, the ratio of the total area of the through hole to the total area of the first functional layer may be 0.50:1, 0.52:1, 0.55:1, 0.58:1, 0.60:1, 0.62:1, 0.65:1, 0.68:1, 0.70:1, 0.72:1, 0.75:1, 0.78:1, 0.80:1, 0.82:1, 0.85:1, or a range formed by any of the foregoing values.

When the ratio of the total area of the through hole to the total area of the first functional layer is within the foregoing range, the effects of the graphene oxide in improving the high-temperature resistance, mechanical strength, and electrolyte solution wettability and retentivity of the separator and slowing down dendrite growth can be fully exerted, and the separator can be provided with good air permeability and high ion transport capacity. Further, the separator provided in the embodiments of this application can reduce the probability of an internal short circuit of the battery, and provide the battery with better cycle performance.

Optionally, the ratio of the total area of the through hole to the total area of the first functional layer may range from (0.52 to 0.82):1, (0.52 to 0.80):1, (0.52 to 0.78):1, (0.55 to 0.82):1, (0.55 to 0.80):1, (0.55 to 0.78):1, (0.60 to 0.82):1, (0.60 to 0.80):1, (0.60 to 0.78):1, (0.62 to 0.82):1, (0.62 to 0.80):1, (0.62 to 0.78):1, (0.62 to 0.75):1, (0.65 to 0.82):1, (0.65 to 0.80):1, (0.65 to 0.78):1, or (0.65 to 0.75):1.

The total area of the first functional layer is a product of a length and a width of the first functional layer, and the total area of the through hole is an area of one through hole or a sum of areas of a plurality of through holes in the first functional layer.

In some embodiments, the through hole may be obtained by one or more of a phase separation process, a photoetching process, and a plasma etching process.

In some embodiments, the through hole may be obtained by an etching process using laser light. The etching process using laser light has advantages such as high yield, high stability, good flexibility, and ease of automated control. For example, during etching using laser light, a scanning path may be set based on a set pattern shape, so that a desired pattern shape is obtained after the etching using laser light is completed. In addition, the first functional layer is generally brownish black and can absorb laser light, and the first porous substrate and the second porous substrate are generally white and do not absorb laser light. Therefore, during the etching using laser light, high-energy laser light is in contact with the graphene oxide to generate a large amount of heat, which can ablate part of the graphene oxide, so that the first functional layer is provided with the through hole penetrating in the thickness direction of the first functional layer. In this way, the separator has good air permeability and high ion transport capacity, which can reduce the internal resistance of the battery and improve the cycle performance of the battery. In addition, during the etching using laser light, high-energy laser light does not damage or substantially does not damage the first porous substrate and the second porous substrate, thereby minimizing a problem of accelerating an internal short circuit caused by breakdown of the first porous substrate and/or the second porous substrate due to the etching using laser light.

In some embodiments, a wavelength of the laser light may range from 100 nm to 2000 nm, and optionally range from 300 nm to 1500 nm.

In some embodiments, a power of the laser light may range from 1 W to 15 W, and optionally range from 2 W to 10 W.

In some embodiments, a cutting speed of a spot of the laser light may range from 20 mm/s to 70 mm/s, and optionally range from 40 mm/s to 60 mm/s.

In some embodiments, a pulse width of a generator of the laser light may range from 2 ps to 20 ps, and optionally range from 5 ps to 15 ps.

In some embodiments, a light-emitting time of the laser light may range from 2 ms/via to 6 ms/via.

Through the adjustment of one or more of the foregoing parameters of the laser light, the first functional layer can be provided with the through hole penetrating in the thickness direction of the first functional layer, and parameters such as the total area of the through hole and the pattern of the through hole can also be adjusted. In addition, through the adjustment of one or more of the foregoing parameters of the laser light, a possibility that high-energy laser light damages the first porous substrate and the second porous substrate can be further minimized.

The through hole may be in various regular or irregular patterns, which is not limited in the embodiments of this application. The through hole may be in a continuous or discontinuous pattern, which is not limited in the embodiments of this application.

Still referring to FIG. 7, in some embodiments, the through hole may be in a continuous pattern. Optionally, the continuous pattern may be a reciprocating bending pattern. For example, the reciprocating bending pattern may be in a bow shape or an S shape. As shown in FIG. 7, the reciprocating bending pattern is in a bow shape. When the continuous pattern is a reciprocating bending pattern, in one aspect, the separator can have good air permeability and high ion transport capacity, thereby further reducing the internal resistance of the battery and improving the cycle performance of the battery. In another aspect, dendrite growth can be slowed down, so that the probability of an internal short circuit of the battery is reduced.

Still referring to FIG. 8, in some embodiments, a plurality of through holes may be provided and are distributed discretely.

In some embodiments, the plurality of through holes may be provided, and the plurality of through holes are distributed in a discrete array. For example, the plurality of through holes may be in a straight arrangement or a staggered arrangement, and the staggered arrangement may be further a 45° staggered arrangement, a 60° staggered arrangement, a Z-type staggered arrangement, or a K-type staggered arrangement, which is not limited in the embodiments of this application. When the plurality of through holes are distributed in a discrete array, in one aspect, the separator can have good air permeability and high ion transport capacity, thereby further reducing the internal resistance of the battery and improving the cycle performance of the battery. In another aspect, dendrite growth can be slowed down, so that the probability of an internal short circuit of the battery is reduced.

The discretely distributed through holes may be in various regular or irregular patterns, which is not limited in the embodiments of this application. For example, each of the through holes may be one or more of a circle, an ellipse, an oblong, a polygon, a sector, an I shape, and a motif. Optionally, the polygon includes one or more of a rectangle, a square, a rhombus, a hexagon, and the like.

In some embodiments, a hole spacing between two adjacent through holes may range from 0.5 µm to 10 µm. For example, the hole spacing between two adjacent through holes may be 0.5 µm, 0.6 µm, 0.7 µm, 0.8 µm, 0.9 µm, 1 µm, 1.1 µm, 1.2 µm, 1.5 µm, 2 µm, 3 µm, 4 µm, 5 µm, 6 µm, 7 µm, 8 µm, 9 µm, 10 µm, or a range formed by any of the foregoing values.

When the hole spacing between two adjacent through holes is within the foregoing range, in one aspect, the separator can have good air permeability and high ion transport capacity, thereby further reducing the internal resistance of the battery and improving the cycle performance of the battery. In another aspect, a hole blockage problem caused by powder or particles formed due to breakage of the first functional layer can be reduced. In addition, the inventors find in further research that, after the first functional layer is crushed into powder or particles, an effect of the first functional layer in eliminating dendrites and an effect of the first functional layer in slowing down dendrite growth are also affected.

Optionally, the hole spacing between two adjacent through holes may range from 0.6 µm to 8 µm, 0.6 µm to 5 µm, 0.6 µm to 4 µm, 0.6 µm to 3 µm, 0.7 µm to 8 µm, 0.7 µm to 5 µm, 0.7 µm to 4 µm, 0.7 µm to 3 µm, 0.8 µm to 8 µm, 0.8 µm to 5 µm, 0.8 µm to 4 µm, 0.8 µm to 3 µm, 1 µm to 5 µm, 1 µm to 4 µm, 1 µm to 3 µm.

Still referring to FIG. 8, a hole spacing S between two adjacent through holes 1031 is a hole spacing between the two adjacent through holes 1031 in a geometric center direction.

In some embodiments, an equivalent circular diameter of the through hole may range from 5 µm to 25 µm. For example, the equivalent circular diameter of the through hole may be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 22 µm, 25 µm, or a range formed by any of the foregoing values.

When the equivalent circular diameter of the through hole is within the foregoing range, in one aspect, the separator can have good air permeability and high ion transport capacity, thereby further reducing the internal resistance of the battery and improving the cycle performance of the battery. In another aspect, dendrite growth can be better slowed down, so that the probability of an internal short circuit of the battery can be further reduced.

Optionally, the equivalent circular diameter of the through hole may range from 6 µm to 22 µm, 7 µm to 20 µm, or 8 µm to 17 µm.

"The equivalent circular diameter of the through hole" is a diameter corresponding to a circle with the same area as the through hole when the through hole is non-circular. When the through hole is circular, the equivalent circular diameter of the through hole is a diameter of the circle.

In some embodiments, a volume distribution particle size Dv50 of the graphene oxide may range from 0.01 µm to 5 µm. When the volume distribution particle size Dv50 of the graphene oxide is within the foregoing range, viscosity of slurry is moderate, which helps to form a uniform first functional layer and reduce powder falling in a coating process, and a probability of the hole blockage problem can be further reduced, so that the separator can have good air permeability and high ion transport capacity, and the battery has better cycle performance. Optionally, the volume distribution particle size Dv50 of the graphene oxide may range from 0.02 µm to 4 µm, 0.05 µm to 3 µm, 0.1 µm to 3 µm, 0.2 µm to 3 µm, 0.5 µm to 3 µm, 0.1 µm to 2 µm, 0.2 µm to 2 µm, or 0.5 µm to 2 µm.

In some embodiments, the graphene oxide has a lamellar structure, and the lamellar structure may include one or more layers, for example, 2 layers to 6 layers, which is not limited in the embodiments of this application.

In some embodiments, a thickness of a sheet of the graphene oxide may be less than or equal to 4 nm, and optionally range from 1 nm to 2 nm.

In some embodiments, the first functional layer may further include a non-particle binder. A type of the non-particle binder is not particularly limited in this application. For example, the non-particle binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyvinyl alcohol (PVA), polyacrylic acid (PAA), polyurethane (PU), carboxymethyl cellulose (CMC), and styrene-butadiene rubber (SBR) emulsion.

In some embodiments, content of the non-particle binder in the first functional layer may be less than or equal to 15%, optionally range from 2% to 15%, and more optionally range from 3% to 10%, based on a total weight of the first functional layer.

In some embodiments, the first functional layer may further include first inorganic particles. The first inorganic particles can reduce a degree of mutual stacking between microsheets of the graphene oxide, thereby helping to further improve the air permeability of the separator and further improve the ion transport capacity of the separator.

Optionally, the first inorganic particles may include one or more of inorganic particles capable of transporting active ions and inorganic particles having a dielectric constant of 5 or more. For example, the inorganic particles capable of transporting active ions may include one or more of lithium phosphate, lithium titanium phosphate (LiₓTi_{y}(PO₄)₃, 0 < x < 2, 0 < y < 3), lithium titanium aluminum phosphate (LiₓAl_{y}Ti_{z}(PO₄)₃, 0 < x < 2, 0 < y < 1, 0 < z < 3), (LiAlTiP)ₓO_{y} glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂ glass (LiₓSi_{y}S_{z}, 0 < x < 3, 0 < y <2, 0 < z < 4), P₂S₅ glass (LiₓP_{y}S_{z}, 0 < x < 3, 0 < y < 3, 0 < z < 7). For example, the inorganic particles having a dielectric constant of 5 or more may include one or more of boehmite, aluminum oxide, magnesium oxide, magnesium hydroxide, silicon oxide, tin dioxide, titanium oxide, calcium oxide, zinc oxide, zirconium oxide, yttrium oxide, nickel oxide, hafnium dioxide, cerium oxide, zirconium titanate, and barium titanate.

In some embodiments, a volume distribution particle size Dv50 of the first inorganic particles may range from 0.2 µm to 5 µm, and optionally range from 1 µm to 3 µm. The volume distribution particle size Dv50 of the first inorganic particles being within the foregoing range helps to further reduce the degree of mutual stacking between microsheets of the graphene oxide, thereby helping to further improve the air permeability of the separator and further improve the ion transport capacity of the separator. In addition, the probability of the hole blockage problem due to powder falling in the coating process can also be reduced, so that the battery can have better cycle performance.

In some embodiments, content of the first inorganic particles in the first functional layer may be less than or equal to 15%, optionally range from 2% to 15%, and more optionally range from 5% to 10%, based on the total weight of the first functional layer.

In some embodiments, a thickness ratio of the first porous substrate to the first functional layer may range from 1:(0.1 to 0.9), and optionally range from 1:(0.1 to 0.5).

In some embodiments, a thickness of the first porous substrate may range from 2 µm to 15 µm, and optionally range from 3 µm to 10 µm.

In some embodiments, a thickness ratio of the second porous substrate to the first functional layer ranges from 1:(0.1 to 0.9), and optionally ranges from 1:(0.1 to 0.5).

In some embodiments, a thickness of the second porous substrate ranges from 2 µm to 15 µm, and optionally ranges from 3 µm to 10 µm.

In some embodiments, a thickness ratio of the first porous substrate to the second porous substrate may range from (0.8 to 1.05):(0.8 to 1.06), and optionally range from (0.9 to 1.03):(0.9 to 1.04).

Through the further adjustment of the thickness of the first porous substrate and/or the thickness of the second porous substrate, the separator is provided with both a high mechanical strength and a high bonding strength, and the separator is also provided with good air permeability and high ion transport capacity.

In some embodiments, the separator may further include a second functional layer located on the first porous substrate and/or a surface of the second porous substrate away from the first functional layer, and the second functional layer may include one or more of second inorganic particles and organic particles. This can improve at least one of the high-temperature resistance and bonding strength of the separator.

Optionally, the second inorganic particles may include one or more of inorganic particles capable of transporting active ions and inorganic particles having a dielectric constant of 5 or more. For example, the inorganic particles capable of transporting active ions may include one or more of lithium phosphate, lithium titanium phosphate (LiₓTi_{y}(PO₄)₃, 0 < x < 2, 0 < y < 3), lithium titanium aluminum phosphate (LiₓAl_{y}Ti_{z}(PO₄)₃, 0 < x < 2, 0 < y < 1, 0 < z < 3), (LiAlTiP)ₓO_{y} glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂ glass (LiₓSi_{y}S_{z}, 0 < x < 3, 0 < y < 2, 0 < z < 4), P₂S₅ glass (LiₓP_{y}S_{z}, 0 < x < 3, 0 < y < 3, 0 < z < 7). For example, the inorganic particles having a dielectric constant of 5 or more may include one or more of boehmite, aluminum oxide, magnesium oxide, magnesium hydroxide, silicon oxide, tin dioxide, titanium oxide, calcium oxide, zinc oxide, zirconium oxide, yttrium oxide, nickel oxide, hafnium dioxide, cerium oxide, zirconium titanate, and barium titanate.

Optionally, the organic particles may include one or more of polyvinylidene fluoride (PVDF) particles, polytetrafluoroethylene (PTFE) particles, vinylidene fluoride-tetrafluoroethylene-propylene terpolymer particles, vinylidene fluoride-hexafluoropropylene-tetrafluoroethylene terpolymer particles, and tetrafluoroethylene-hexafluoropropylene copolymer particles.

In some embodiments, a material of the first porous substrate may include, but is not limited to, one or more of polyolefin (for example, polyethylene and polypropylene), halogenated polyolefin (for example, polytetrafluoroethylene, polyvinylidene fluoride, and polyvinyl chloride), polyamide, polyester (for example, polyethylene terephthalate), and respective derivatives thereof.

In some embodiments, a material of the second porous substrate may include, but is not limited to, one or more of polyolefin (for example, polyethylene and polypropylene), halogenated polyolefin (for example, polytetrafluoroethylene, polyvinylidene fluoride, and polyvinyl chloride), polyamide, polyester (for example, polyethylene terephthalate), and respective derivatives thereof.

The derivatives generally are products derived by replacing hydrogen atoms or atomic groups in a polymer with other atoms or atomic groups.

In some embodiments, a weight average molecular weight of the first porous substrate may range from 100000 to 1000000.

In some embodiments, a weight average molecular weight of the second porous substrate may range from 100000 to 1000000.

The weight average molecular weights of the first porous substrate and the second porous substrate have well-known meanings in the art, and can be measured by using methods known in the art. For example, gel permeation chromatography may be used for testing.

In some embodiments, a total thickness of the separator may range from 5 µm to 25 µm, and optionally range from 8 µm to 18 µm. This helps to provide the separator with a high mechanical strength, good air permeability, and high ion transport capacity.

In some embodiments, a porosity of the separator may range from 40% to 80%, and optionally range from 45% to 76%. This helps to provide the separator with good air permeability and high ion transport capacity.

The porosity of the separator has well-known meanings in the art, and can be measured by using methods known in the art. For example, testing can be performed with reference to the standard GB/T 36363 -2018.

In some embodiments, an ionic conductivity of the separator at 25°C may range from 0.8 mS•cm⁻¹ to 2.8 mS•cm⁻¹, and optionally range from 1.0 mS•cm⁻¹ to 2.5 mS•cm⁻¹.

The separator has a high ionic conductivity, which can improve the cycle performance of the battery.

The ionic conductivity of the separator may be tested through an electrochemical impedance spectroscopy experiment. For example, the separator may be cut into a wafer with a particular area, dried, and placed between two stainless steel electrodes, which are sealed after a sufficient amount of electrolyte solution is absorbed to form a button battery for performing the electrochemical impedance spectroscopy experiment. A resistance Rs of a separator with a different layer quantity n measured by using electrochemical impedance spectroscopy of a confined symmetric battery is used as a resistance of the separator. A slope k (corresponding to a resistance of a single-layer separator) is obtained by plotting Rs and n. The ionic conductivity of the separator is calculated according to a resistance of a single-layer separator, an area of the separator, and a thickness (a single-layer thickness) of the separator.

In some embodiments, an air resistance of the separator may range from 100 s/100 ml to 400 s/100 ml, and optionally range from 120 s/100 ml to 200 s/100 ml.

The separator has good air permeability, which can improve the cycle performance of the battery.

The air resistance of the separator has well-known meanings in the art, and can be measured by using methods known in the art. For example, testing can be performed with reference to the standard GB/T 36363 -2018.

In some embodiments, a tensile strength in a transverse direction (TD) of the separator may be greater than or equal to 1000 kgf/cm², and optionally range from 1100 kgf/cm² to 1600 kgf/cm².

In some embodiments, a tensile strength in a longitudinal direction (MD) of the separator may be greater than or equal to 900 kgf/cm², and optionally ranges from 1000 kgf/cm² to 1600 kgf/cm².

The separator has high tensile strengths in both the transverse direction and the longitudinal direction, which can improve the reliability of the battery.

The tensile strength of the separator has well-known meanings in the art, and can be measured by using methods known in the art. For example, testing can be performed with reference to the standard GB/T 36363-2018. During testing, a stretching rate may be 50 mm/min.

In some embodiments, a puncture strength of the separator may range from 9.0 N•µm⁻¹ to 15 N•µm⁻¹, and optionally range from 9.5 N•µm⁻¹ to 12 N•µm⁻¹.

The separator has a high puncture strength, which can improve the reliability of the battery.

The puncture strength of the separator has well-known meanings in the art, and can be measured by using methods known in the art. For example, testing can be performed with reference to the standard GB/T 36363-2018. For example, the separator may be cut into a sample with a width of 10 mm and a length of 150 mm and penetrated with a steel needle at a rate of 50 mm/min, and a maximum load when the steel needle penetrates the separator is read. A diameter of the steel needle may be 1 mm, a radius of a spherical tip may be 0.5 mm, and a surface of the steel needle needs to be smooth and free of rust, oxide layers, and oil stains.

In this application, the volume distribution particle size Dv50 of the material has well-known meanings in the art, and can be measured by using instruments and methods known in the art. For example, a laser particle size analyzer (for example, Master Size 3000) may be used for testing with reference to the standard GB/T 19077-2016.

### [Preparation method]

An embodiment of this application further provides a preparation method of a separator, which can prepare the separator as described above in this application.

In some embodiments, the preparation method includes steps: providing slurry including graphene oxide; coating the slurry including the graphene oxide on a surface of a first porous substrate and/or a second multilayer substrate layer, and then performing joining, hot pressing, drying, and an etching process to obtain a separator, where the separator includes the first porous substrate, the second porous substrate, and a first functional layer located between the first porous substrate and the second porous substrate, the first functional layer includes the graphene oxide, and the first functional layer is provided with a through hole penetrating in a thickness direction of the first functional layer.

In some embodiments, the slurry including the graphene oxide may further include a binder, first inorganic particles, and the like.

In some embodiments, the slurry including the graphene oxide may be prepared according to the following steps: soaking the graphene oxide in a first solvent for a period of time, performing centrifugation, taking a precipitate obtained by centrifugation to soak the precipitate in the first solvent again, repeating this several times, and finally taking a precipitate obtained by centrifugation for standing for a period of time to obtain purified graphene oxide; mixing the purified graphene oxide and a second solvent, performing stirring uniformly, and performing standing for a period of time to obtain a mixture; and adding the binder to the obtained mixture, and stirring the mixture uniformly to obtain the slurry including the graphene oxide.

In some embodiments, during the preparation of the slurry including the graphene oxide, the first solvent may be ethanol or isopropanol.

In some embodiments, when the graphene oxide is soaked in the first solvent, duration of soaking each time may range from 1 h to 5 h, and a quantity of times of soaking may range from 2 to 5.

In some embodiments, during the preparation of the slurry including the graphene oxide, the precipitate obtained by centrifugation may be left standing for 5 h to 10 h to obtain the purified graphene oxide.

In some embodiments, during the preparation of the slurry including the graphene oxide, the second solvent may be N-methylpyrrolidone (NMP), but is not limited thereto.

In some embodiments, the purified graphene oxide and the second solvent are mixed, and after being uniformly stirred, the mixture may be left standing for 8 h to 16 h to obtain a mixture.

In some embodiments, during the preparation of the slurry including the graphene oxide, a pore-forming agent may be further added to the obtained mixture to improve air permeability of the separator. For example, the pore-forming agent may include one or more of polyvinylpyrrolidone (PVP), polyethylene glycol (PEG), polyvinyl alcohol (PVA), mineral oil, kerosene, decahydronaphthalene, sodium chloride, potassium carbonate, lithium chloride, an ADC foaming agent, and water.

In some embodiments, after the binder is added to the obtained mixture, the mixture may be stirred at a rotational speed ranging from 700 rpm to 1200 rpm for 5 min to 50 min to obtain the slurry including the graphene oxide.

In some embodiments, during the preparation of the separator, the etching process may include one or more of a photoetching process and a plasma etching process.

In some embodiments, during the preparation of the separator, the etching process may be an etching process using laser light.

In some embodiments, a wavelength of the laser light may range from 100 nm to 2000 nm, and optionally range from 300 nm to 1500 nm.

In some embodiments, a power of the laser light may range from 1 W to 15 W, and optionally range from 2 W to 10 W.

In some embodiments, a cutting speed of a spot of the laser light may range from 20 mm/s to 70 mm/s, and optionally range from 40 mm/s to 60 mm/s.

In some embodiments, a pulse width of a generator of the laser light may range from 2 ps to 20 ps, and optionally range from 5 ps to 15 ps.

In some embodiments, a light-emitting time of the laser light may range from 2 ms/via to 6 ms/via.

In some embodiments, during the preparation of the separator, a temperature of the hot pressing may range from 100°C to 130°C.

In some embodiments, during the preparation of the separator, a pressure of the hot pressing may range from 2 MPa to 6 MPa.

In some embodiments, during the preparation of the separator, the drying may be performed in a vacuum oven. Optionally, a temperature of the drying may range from 60°C to 120°C. Optionally, duration of the drying may range from 5 h to 10 h.

In some embodiments, during the preparation of the separator, the slurry including the graphene oxide may be coated on one of the first porous substrate and the second multilayer substrate layer, and then the other of the first porous substrate and the second multilayer substrate layer is joined.

In some embodiments, during the preparation of the separator, the slurry including the graphene oxide may be simultaneously coated on one of surfaces of the first porous substrate and one of surfaces of the second multilayer substrate layer, and then coating sides of the first porous substrate and the second porous substrate are joined.

In some embodiments, the preparation method of the separator may further include a step of arranging a second functional layer on the first porous substrate and/or a surface of the second porous substrate away from the first functional layer of the separator obtained above. The second functional layer may include one or more of second inorganic particles and organic particles.

For some parameters such as raw materials and content thereof used in the preparation method of the separator provided in the embodiments of this application, refer to the separator described above in this application, and details are not described herein again. Unless otherwise specified, the raw materials used in the preparation method of the separator in this application are commercially available.

### [Positive electrode plate]

In some embodiments, the positive electrode plate includes a positive electrode current collector and a positive electrode film layer disposed on at least one surface of the positive electrode current collector. For example, the positive electrode current collector has two opposite surfaces in a thickness direction of the positive electrode current collector, and the positive electrode film layer is disposed on either or both of the two opposite surfaces of the positive electrode current collector.

The positive electrode film layer includes a positive electrode active material. A type of the positive electrode active material is not particularly limited in this application, and an appropriate positive electrode active material may be selected according to a type of a battery cell.

For example, when the battery cell is a lithium-ion battery cell or a lithium metal battery cell, the positive electrode active material may include, but is not limited to, one or more of lithium transition metal oxide, lithium-containing phosphate, metal chalcogenide with a layered structure, and respective modified compounds thereof. Examples of lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, and respective modified compounds thereof. Examples of lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve the energy density of a battery, the positive electrode active material may include one or more of lithium transition metal oxide represented by a general formula LiₐNi_{b}Co_{c}MₐOₑDᵣ and modified compounds thereof. 0.8 ≤ a ≤ 1.2, 0.5 ≤ B < 1, 0 < c < 1, 0 < d < 1, 1 ≤ e ≤ 2, 0 ≤ f ≤ 1, M includes one or more of Ge, Mo, Sn, Mn, Al, Zr, Zn, Cu, Cr, Mg, Fe, V, Ti, and B, and D includes one or more of N, F, S and Cl.

For example, the positive electrode active material may include one or more of LiCoO₂, LiNiO₂, LiMnO₂, LiMn₂O₄, LiNi_{1/2}Mn_{1/2}O₂, LiNi_{1/3}Co_{1/3}Mn_{1/3}O2 (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄, and LiMnPO₄.

The modified compounds of the positive electrode active materials may be obtained by performing doping modification and/or surface coating modification on the positive electrode active material.

When the battery cell is a sodium-ion battery cell or a sodium metal battery cell, the positive electrode active material may include, but is not limited to, one or more of sodium transition metal oxide, a polyanionic material (for example, phosphate, fluorophosphate, pyrophosphate, or sulfate), and a Prussian blue material. For example, the positive electrode active material may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material having a general formula XₚM'_{q}(PO₄)ᵣOₓY₃₋ₓ. In a general formula XₚM'_{q}(PO₄)ᵣO_{z}Y_{3-z}, 0 < p ≤ 4, 0 < q ≤ 2, 1 ≤ r ≤ 3, 0 ≤ z ≤ 2, X includes one or more of H⁺, Li⁺, Na⁺, K⁺, NH₄⁺, M' includes transition metal, and optionally includes one or more of V, Ti, Mn, Fe, Co, Ni, Cu, and Zn, and Y includes a halogen atom, and optionally includes one or more of F, Cl, and Br.

The modified compounds of the positive electrode active materials may be obtained by performing doping modification and/or surface coating modification on the positive electrode active material.

When the battery cell is a lithium-sulfur battery or a sodium-sulfur battery, the positive electrode active material may include, but is not limited to, one or more of elemental sulfur, a sulfur-carbon composite material, a sulfur-conductive polymer composite material, and a sulfur-metal oxide composite material.

In some embodiments, the positive electrode film layer may further optionally include a positive electrode conductive agent. A type of the positive electrode conductive agent is not particularly limited in this application. For example, the positive electrode conductive agent may include one or more of superconducting carbon, conductive graphite, acetylene black, carbon black, Ketjen black, carbon dots, carbon nanotubes, graphene, and carbon nanofibers.

In some embodiments, the positive electrode film layer may further optionally include a positive electrode binder. A type of the positive electrode binder is not particularly limited in this application. For example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylate resin, and polyethylene oxide.

In some embodiments, the positive electrode current collector may use a metal foil or a composite current collector. As an example of the metal foil, an aluminum foil may be used. The composite current collector may include a polymer material base layer and a layer of a metal material formed on at least one surface of the polymer material base layer. For example, the metal material may include one or more of aluminum, aluminum alloy, nickel, nickel alloy, titanium, titanium alloy, silver, and silver alloy. For example, the polymer material base layer may include one or more of polypropylene (PP), polyethylene terephthalate (PET), polybutylene terephthalate (PBT), polystyrene (PS), and polyethylene (PE).

The positive electrode film layer is usually formed by coating positive electrode slurry on the positive electrode current collector and performing drying and cold pressing. The positive electrode slurry is usually formed by dispersing the positive electrode active material, an optional conductive agent, an optional binder, and any other components in a solvent and performing stirring uniformly. The solvent may be N-methylpyrrolidone (NMP), but is not limited thereto.

### [Negative electrode plate]

A type of the negative electrode plate is not particularly limited in this application, and an appropriate negative electrode plate may be selected according to a type of a battery cell.

For example, when the battery cell is a lithium-ion battery cell or a sodium-ion battery cell, the negative electrode plate may include a negative electrode current collector and a negative electrode film layer disposed on at least one surface of the negative electrode current collector, and the negative electrode film layer includes a negative electrode active material. For example, the negative electrode current collector has two opposite surfaces in a thickness direction of the negative electrode current collector, and the negative electrode film layer is disposed on either or both of the two opposite surfaces of the negative electrode current collector.

The negative electrode active material may be a negative electrode active material well-known in the art. For example, the negative electrode active material may include, but is not limited to, one or more of a carbon-based material, a silicon-based material, a tin-based material, and lithium titanate. The carbon-based material may include one or more of natural graphite, artificial graphite, soft carbon, hard carbon, pyrolytic carbon, coke, glassy carbon, an organic polymer compound sintered, and mesophase carbon microspheres. The silicon-based material may include one or more of elemental silicon, silicon oxide, a silicon-carbon composite, a silicon-nitrogen composite, and a silicon alloy material. The tin-based material may include one or more of elemental tin, tin oxide, or a tin alloy material.

In some embodiments, the negative electrode film layer may further optionally include a negative electrode conductive agent. A type of the negative electrode conductive agent is not particularly limited in this application. For example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may further optionally include a negative electrode binder. A type of the negative electrode binder is not particularly limited in this application. For example, the negative electrode binder may include one or more of styrene-butadiene rubber (SBR), water-soluble unsaturated resin SR-1B, waterborne acrylic resin (for example, polyacrylic acid PAA, poly(methyl methacrylate) PMMA, and sodium polyacrylate PAAS), polyacrylamide (PAM), polyvinyl alcohol (PVA), sodium alginate (SA), and carboxymethyl chitosan (CMCS).

In some embodiments, the negative electrode film layer may further optionally include other additives. For example, the other additives may include a thickening agent, for example, sodium carboxymethyl cellulose (CMC) and a PTC thermistor material.

In some embodiments, the negative electrode current collector may use a metal foil or a composite current collector. As an example of the metal foil, a copper foil may be used. The composite current collector may include a polymer material base layer and a layer of a metal material formed on at least one surface of the polymer material base layer. For example, the metal material may include one or more of copper, copper alloy, aluminum, aluminum alloy, nickel, nickel alloy, titanium, titanium alloy, silver, and silver alloy. For example, the polymer material base layer may include one or more of polypropylene (PP), polyethylene terephthalate (PET), polybutylene terephthalate (PBT), polystyrene (PS), and polyethylene (PE).

The negative electrode film layer is usually formed by coating negative electrode slurry on the negative electrode current collector and performing drying and cold pressing. The negative electrode slurry is usually formed by dispersing the negative electrode active material, an optional conductive agent, an optional binder, and other optional additives in a solvent and performing stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate in this application may further include a conductive primer layer (which is, for example, formed by a conductive agent and a binder) sandwiched between the negative electrode current collector and the negative electrode film layer and disposed on the surface of the negative electrode current collector. In some other examples, the negative electrode plate in this application further includes a protective layer covering a surface of the negative electrode film layer.

For example, when the battery cell is a lithium metal battery cell, a sodium metal battery cell, a lithium-sulfur battery cell, a sodium-sulfur battery cell, a lithium-air battery cell, or a sodium-air battery cell, the negative electrode plate may not include a material, for example, graphite, capable of deintercalating and intercalating active ions. For example, in some embodiments, the negative electrode plate may include a negative electrode current collector and a lithium sheet, a lithium alloy sheet, a sodium sheet, a sodium alloy sheet, or the like disposed on at least one surface of the negative electrode current collector.

For example, when the battery cell is a lithium metal battery cell or a sodium metal battery cell, the negative electrode plate may include a mesh or foamed three-dimensional framework layer, for example, foamed copper (or copper alloy), foamed nickel (or nickel alloy), foamed aluminum (or aluminum alloy), a copper (or copper alloy) mesh, a nickel (or nickel alloy) mesh, or an aluminum (or aluminum alloy) mesh. A pore structure of the three-dimensional framework layer may be used as a storage space for lithium metal, sodium metal, or the like.

### [Electrolyte]

A type of the electrolyte is not specifically limited in this application, and may be selected as required. For example, the electrolyte may include one or more selected from a solid electrolyte and a liquid electrolyte (namely, an electrolyte solution).

In some embodiments, the electrolyte may use an electrolyte solution, and the electrolyte solution may include an electrolyte salt and a solvent. Types of the electrolyte salt and the solvent are not specifically limited, and may be selected according to actual requirements.

For example, when the battery cell is a lithium-ion battery cell, a lithium metal battery cell, a lithium-sulfur battery cell, or a lithium-air battery cell, the electrolyte salt may include, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium hexafluoroantimonate (LiSbF₆), lithium bis(fluorosulfonyl)imide (LiFSI), lithium bis(trifluoromethanesulfonyl)imide (LiTFSI), LiCF₃CO₂, lithium triflate (LiTFS), lithium difluoro(oxalato)borate (LiDFOB), lithium bis(oxalato)borate (LiBOB), lithium difluorophosphate (LiPO₂F₂), lithium difluorobis(oxalate) phosphate (LiDFOP), and lithium tetrafluoro(oxalato)phosphate (LiTFOP).

For example, when the battery cell is a sodium-ion battery cell, a sodium metal battery cell, a sodium-sulfur battery cell, or a sodium-air battery cell, the electrolyte salt may include, but is not limited to, one or more of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium triflate (NaTFS), sodium difluoro(oxalato)borate (NaDFOB), sodium bis(oxalato)borate (NaBOB), sodium difluorophosphate (NaPO₂F₂), sodium difluorobis(oxalate) phosphate (NaDFOP), and sodium tetrafluoro(oxalato)phosphate (NaTFOP).

In some embodiments, a concentration of the electrolyte salt may be 0.3 mol/L or more, and optionally 0.7 mol/L or more, and the concentration of the electrolyte salt is further 4 mol/L or less, and optionally, 2.5 mol/L or less.

The solvent may include one or more of esters (for example, carbonate, phosphate, carboxylate, sulfate, and sulfonate), ethers, fluoroethers, sulfones, nitriles, and the like.

For example, the solvent may include, but is not limited to, one or more of ethylene carbonate (EC), propylene carbonate (PC), butylene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), diethyl sulfone (ESE), tetraethylene glycol dimethyl ether (TEGDME), ethylene glycol dimethyl ether (DME), 1,3-dioxolane (DOL), trimethyl phosphate, and 3-methoxypropionitrile.

In some embodiments, when the battery cell is a lithium metal battery cell or a sodium metal battery cell, the solvent may include an ether solvent and/or a fluoroether solvent, for example, may include, one or more of tetraethylene glycol dimethyl ether (TEGDME), ethylene glycol dimethyl ether (DME), 1,3-dioxolane (DOL), H(CF₂)₂OCH₃, C₄F₉OCH₃, H(CF₂)₂OCH₂CH₃, H(CF₂)₂OCH₂CF₃, H(CF₂)₂CH₂O(CF₂)₂H (TTE), CF₃CHFCF₂OCH₃, CF₃CHFCF₂OCH₂CH₃, 2-trifluoromethylhexafluoropropyl methyl ether, 2-trifluoromethylhexafluoropropyl ethyl ether, 2-trifluoromethylhexafluoropropyl propyl ether, 3-trifluoromethyloctafluorobutyl methyl ether, 3-trifluoromethyloctafluorobutyl ethyl ether, 3-trifluoromethyloctafluorobutyl propyl ether, 4-trifluoromethyldecafluoropentyl methyl ether, 4-trifluoromethyldecafluoropentyl ethyl ether, 4-trifluoromethyldecafluoropentyl propyl ether, 5-trifluoromethyldodecafluorohexyl methyl ether, 5-trifluoromethyldodecafluorohexyl ethyl ether, 5-trifluoromethyldodecafluorohexyl propyl ether, 6-trifluoromethyltetradecafluoroheptyl methyl ether, 6-trifluoromethyltetradecafluoroheptyl ethyl ether, 6-trifluoromethyltetradecafluoroheptyl propyl ether, 7-trifluoromethylhexadecafluorooctyl methyl ether, 7-trifluoromethylhexadecafluorooctyl ethyl ether, and 7-trifluoromethylhexadecafluorooctyl propyl ether.

In some embodiments, the electrolyte solution may further include various additives that can improve the performance of the battery, which is not limited in the embodiments of this application.

An embodiment of this application further provides a power consuming apparatus. The power consuming apparatus includes the battery in this application. The battery may be used as a power source of the power consuming apparatus, or may be used as an energy storage unit of the power consuming apparatus. The power consuming apparatus may be, but is not limited to, a mobile device (for example, a mobile phone, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

A type of the battery may be selected for the power consuming apparatus according to a use requirement of the power consuming apparatus. For example, a battery cell, a battery module, or a battery pack may be selected.

FIG. 9 is a schematic diagram of a power consuming apparatus as an example. The power consuming apparatus may be a pure electric vehicle, a hybrid electric vehicle, a plug-in hybrid electric vehicle, or the like. To meet the requirements of the power consuming apparatus for a high power and high energy density, a battery pack or a battery module may be used.

For another example, the power consuming apparatus may be a mobile phone, a tablet computer, or a notebook computer. The power consuming apparatus usually needs to be light and thin, and a battery cell may be used as a power source.

### Examples

Content disclosed in this application is described in detail in the following examples. These examples are only for illustrative purposes because various modifications and changes made without departing from the scope of the content disclosed in this application are apparent to a person skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

Separators in Examples 1 to 30 were all prepared according to the following method, with differences shown in Table 1.

Two polyethylene porous films with a thickness of 7 µm were taken as a first porous substrate and a second porous substrate respectively, cleaned with ethanol or acetone, dried and flattened at 60°C to 70°C, and then subjected to plasma treatment for 4 min for later use.

Commercially available graphene oxide was soaked in anhydrous ethanol for 3 h, followed by centrifugation for purification, a precipitate obtained by centrifugation was soaked in anhydrous ethanol again, this was repeated 3 times, and then a precipitate obtained by centrifugation was left standing for 8 h, and naturally air-dried.

A pore-forming agent PVP and a solvent NMP were added to the obtained graphene oxide for mixing, where a mass of the PVP was 1% of a mass of the graphene oxide, fully stirred and dispersed, and left standing for 12 h to obtain a mixture.

A binder PVDF was added to the obtained mixture, where a mass of PVDF was 5% of the mass of the graphene oxide, and stirred at 1000 rpm for 20 min to form slurry.

The slurry was coated on a side of the above-mentioned polyethylene porous film through wire rod coating, to obtain two polyethylene porous films with a coating. Coating sides of the two polyethylene porous films were laminated and bonded together by hot pressing, and then dried in a vacuum oven at 60°C for 8 h. Subsequently, a separator was etched by using laser light to form a through hole in the coating (a first functional layer).

In Examples 1 to 30, a wavelength of the laser light may range from 355 nm to 1061 nm, a power may range from 3 W to 5 W, a cutting speed of a spot may range from 40 mm/s to 60 mm/s, a pulse width of a generator may range from 5 ps to 15 ps, and a light-emitting time may range from 2 ms/via to 6 ms/via. Through the adjustment of one or more of the foregoing parameters of the laser light, a total area of the through hole and/or a depth of the through hole can be adjusted, and the depth of the through hole is the same as a thickness of the coating to form the penetrating through hole.

Patterns of through holes formed by etching using laser light in Examples 1 to 30 were shown in Table 1. A ratio of the total area of the through hole to an area of the first functional layer may be obtained by adjusting one or more of parameters such as the pattern of the through hole, an arrangement manner of a pattern of the through hole, a diameter of the through hole, and a hole spacing of the through hole.

A thickness of the first functional layer in Examples 1 to 30 can be adjusted by adjusting one or more of the parameters such as solid content of the slurry, a coating weight, or a quantity of times of coating.

### Comparative example 1

A preparation method of a separator was similar to that in Example 1, except that the separator was not subjected to etching treatment using laser light.

### Test section

### (1) Test for a thickness of the separator

The test was carried out according to the national standard GB/T 36363-2018. During the test, a quantity of separator samples may be 6 or more, 3 points were taken for each separator sample, and test results were averaged.

### (2) Test for a tensile strength of the separator

A tensile strength in a longitudinal direction (MD) and a tensile strength in a transverse direction (TD) of the separator were tested according to GB/T 36363-2018. The separator was cut into a sample with a width of 10 mm and a length of 150 mm for testing. The quantity of separator samples may be 12, long sides of 6 samples were parallel to the longitudinal direction of the separator, long sides of 6 samples were parallel to the transverse direction of the separator, and test results were averaged. A test instrument may be a universal tensile machine. During testing, a stretching rate may be 50 mm/min.

### (3) Test for an air resistance of the separator

The test was carried out according to the national standard GB/T 36363-2018. During the test, the quantity of separator samples may be 6 or more, and test results were averaged. A test instrument may be a fully automatic air resistance tester. During the test, duration required for air of 100 mL to pass through a sample was used as the air resistance of the separator. A smaller air resistance of the separator indicates better air permeability.

### (4) Test of an ionic conductivity of the separator

The ionic conductivity of the separator was tested through an electrochemical impedance spectroscopy experiment. Specifically, the separator was cut into a wafer with a particular area (for example, a diameter of 22 mm), dried, and placed between two stainless steel electrodes, which were sealed after a sufficient amount of electrolyte solution was absorbed to form a button battery for performing the electrochemical impedance spectroscopy experiment by using an electrochemical workstation. The electrolyte solution uses a mixing system of LiFSI, ethylene glycol dimethyl ether (DME), and 1,1,2,2-tetrafluoroethyl 2,2,3,3-tetrafluoropropyl ether (H(CF₂)₂CH₂O(CF₂)₂H, TTE) with a molar ratio of 1:1.2:3. A resistance Rs of a separator with a different layer quantity n measured by using electrochemical impedance spectroscopy of a confined symmetric battery is used as a resistance of the separator. A slope k (corresponding to a resistance of a single-layer separator) is obtained by plotting Rs and n. The ionic conductivity of the separator is calculated according to a resistance of a single-layer separator, an area of the separator, and a thickness (a single-layer thickness) of the separator.

The electrochemical workstation may be Shanghai Chenhua CHI 660C electrochemical workstation, a frequency range of alternating signal signals is 0.01 Hz to 1 MHz, and an amplitude of a sine wave potential is 5 mV. For accuracy, an average value of 6 parallel samples was taken as a test result.

### (5) Test for cycle performance

Lithium iron phosphate, carbon black (Super P) as a conductive agent, and polyvinylidene fluoride (PVDF) as a binder were uniformly mixed with a mass ratio of 8:1:1 in an appropriate amount of N-methylpyrrolidone (NMP) as a solvent to obtain positive electrode slurry. The positive electrode slurry was coated on an aluminum foil of a positive electrode current collector, and after drying, a positive electrode plate was obtained. In an argon-protected glove box, the positive electrode plate, the separator, and a lithium sheet were assembled into a CR2430 button battery. An electrolyte salt in the electrolyte solution was LiDFOB, and had a concentration of 1.2 mol/L. A solvent of the electrolyte solution was a mixture of ethylene carbonate (EC) and ethyl methyl carbonate (EMC) with a mass ratio of 30:70.

At 25°C, the button battery was charged to 3.65 V at a constant current of 0.1 C, and then charged to 0.02 C at a constant voltage of 3.65 V. After standing for 10 min, the button battery was discharged to 2.5 V at a constant current of 0.1 C. The button battery was cycled twice according to the foregoing method, and then subjected to the following cycle performance test.

First, the button battery was charged to 3.65 V at a constant current of 0.33 C, and then charged to 0.02 C at a constant voltage of 3.65 V, to make the button battery fully charged. Next, after standing for 10 min, the button battery was discharged to 2.5 V at a constant current of 0.33 C. This was a cyclic charge-discharge process. Discharge capacity at this time was recorded, which was discharge capacity of the first cycle. Subsequently, the button battery was subjected to a cyclic charge-discharge test according to the foregoing method, and the discharge capacity after each cycle was recorded until the discharge capacity of the button battery decayed to 70% of the discharge capacity of the first cycle, and a quantity of cycles at this time was used to characterize cycle performance of the battery.

With reference to the test results in Table 1, it can be learnt that the separator provided in the examples of this application can give full play to the effects of graphene oxide in slowing down dendrite growth and reducing a probability of an internal short circuit of the battery, so that the separator has a high mechanical strength, good air permeability, and high ion transport capacity, and the battery using the separator can further have good cycle performance.

It should be noted that this application is not limited to the foregoing embodiments. The foregoing embodiments are exemplary only, and any embodiment having substantially the same technical idea and the same effects within the scope of the technical solutions of this application shall fall within the technical scope of this application. In addition, other embodiments obtained by making various modifications that can be conceived by a person skilled in the art to the embodiments or obtained by combining some of the constituent elements of the embodiments without departing from the scope of the subject matter of this application shall also fall within the scope of this application.

**Table 1**

| Serial No. | Graphene oxide | | Through hole | | Total area of the through hole: the total area of the first function al layer | Thickne ss of the first function al layer µm | Performance of the separator | | | | | Performan ce of the battery |
|---|---|---|---|---|---|---|---|---|---|---|---|---|
| | Dv5 0 µm | Thickne ss of the sheet nm | Pattern | Equivale nt circular diameter µm | | | Thickne ss µm | MD tensile strengt h kgf/cm ² | TD tensile strengt h kgf/cm ² | Ionic conductivi ty mS•cm⁻¹ | Air resistanc e s/100 ml | Quantity of cycles |
| Example 1 | 1 | 1.2 | Circular, distributed in an array | 12 | 0.75:1 | 0.3 | 14.3 | 1175 | 1213 | 1.61 | 147.5 | 276 |
| Example 2 | 1 | 1.2 | Circular, distributed in an array | 12 | 0.75:1 | 0.5 | 14.5 | 1180 | 1220 | 1.55 | 148.9 | 286 |
| Example 3 | 1 | 1.2 | Circular, distributed in an array | 12 | 0.75:1 | 0.9 | 14.9 | 1198 | 1232 | 1.52 | 150.1 | 302 |
| Example 4 | 1 | 1.2 | Circular, distributed in an array | 12 | 0.75:1 | 1.1 | 15.1 | 1216 | 1238 | 1.47 | 154.4 | 315 |
| Example 5 | 1 | 1.2 | Circular, distributed in an array | 12 | 0.75:1 | 1.3 | 15.3 | 1243 | 1253 | 1.43 | 157.8 | 323 |
| Example 6 | 1 | 1.2 | Circular, distributed in an array | 12 | 0.75:1 | 1.5 | 15.5 | 1245 | 1263 | 1.40 | 158.2 | 329 |
| Example 7 | 1 | 1.2 | Circular, distributed in an array | 12 | 0.75:1 | 2.0 | 16.0 | 1251 | 1269 | 1.37 | 159.2 | 334 |
| Example 8 | 1 | 1.2 | Circular, distributed in an array | 12 | 0.75:1 | 2.4 | 16.4 | 1255 | 1273 | 1.34 | 159.5 | 339 |
| Example 9 | 1 | 1.2 | Circular, distributed in an array | 12 | 0.75:1 | 3.5 | 17.5 | 1360 | 1387 | 1.28 | 161.8 | 341 |
| Example 10 | 1 | 1.2 | Circular, distributed in an array | 12 | 0.75:1 | 5.0 | 19.0 | 1405 | 1432 | 1.24 | 164.8 | 335 |
| Example 11 | 1 | 1.2 | Circular, distributed in an array | 12 | 0.75:1 | 8.0 | 22.0 | 1421 | 1451 | 1.17 | 173.8 | 321 |
| Example 12 | 1 | 1.2 | Circular, distributed in an array | 12 | 0.75:1 | 10.0 | 24.0 | 1454 | 1459 | 1.12 | 180.2 | 310 |
| Example 13 | 1 | 1.2 | Continuou s, bow shape | / | 0.75:1 | 2.0 | 16.0 | 1232 | 1268 | 1.45 | 152.3 | 328 |
| Example 14 | 1 | 1.2 | Continuou s, bow shape | / | 0.75:1 | 2.4 | 16.4 | 1239 | 1265 | 1.38 | 150.4 | 334 |
| Example 15 | 1 | 1.2 | Circular, distributed in an array | 12 | 0.85:1 | 1.3 | 15.3 | 1206 | 1221 | 1.48 | 156.7 | 314 |
| Example 16 | 1 | 1.2 | Circular, distributed in an array | 12 | 0.82:1 | 1.3 | 15.3 | 1220 | 1238 | 1.47 | 157.1 | 330 |
| Example 17 | 1 | 1.2 | Circular, distributed in an array | 12 | 0.78:1 | 1.3 | 15.3 | 1235 | 1245 | 1.45 | 157.5 | 325 |
| Example 18 | 1 | 1.2 | Circular, distributed in an array | 12 | 0.71:1 | 1.3 | 15.3 | 1247 | 1267 | 1.36 | 159.2 | 319 |
| Example 19 | 1 | 1.2 | Circular, distributed in an array | 12 | 0.68:1 | 1.3 | 15.3 | 1251 | 1271 | 1.30 | 162.2 | 314 |
| Example 20 | 1 | 1.2 | Circular, distributed in an array | 12 | 0.60:1 | 1.3 | 15.3 | 1253 | 1272 | 1.25 | 167.6 | 310 |
| Example 21 | 1 | 1.2 | Circular, distributed in an array | 12 | 0.50:1 | 1.3 | 15.3 | 1255 | 1274 | 1.17 | 180.8 | 301 |
| Example 22 | 1 | 1.2 | Circular, distributed in an array | 5 | 0.75:1 | 1.3 | 15.3 | 1304 | 1346 | 1.28 | 171.8 | 312 |
| Example 23 | 1 | 1.2 | Circular, distributed in an array | 8 | 0.75:1 | 1.3 | 15.3 | 1289 | 1317 | 1.35 | 162.3 | 319 |
| Example 24 | 1 | 1.2 | Circular, distributed in an array | 17 | 0.75:1 | 1.3 | 15.3 | 1201 | 1239 | 1.47 | 154.2 | 339 |
| Example 25 | 1 | 1.2 | Circular, distributed in an array | 25 | 0.75:1 | 1.3 | 15.3 | 1179 | 1217 | 1.50 | 149.7 | 320 |
| Example 26 | 0.01 | 1.2 | Circular, distributed in an array | 12 | 0.75:1 | 1.3 | 15.3 | 1447 | 1537 | 1.35 | 161.6 | 307 |
| Example 27 | 0.05 | 1.2 | Circular, distributed in an array | 12 | 0.75:1 | 1.3 | 15.3 | 1415 | 1472 | 1.46 | 153.2 | 315 |
| Example 28 | 0.3 | 1.2 | Circular, distributed in an array | 12 | 0.75:1 | 1.3 | 15.3 | 1325 | 1407 | 1.44 | 155.2 | 319 |
| Example 29 | 3 | 1.2 | Circular, distributed in an array | 12 | 0.75:1 | 1.3 | 15.3 | 1231 | 1247 | 1.37 | 160.0 | 316 |
| Example 30 | 5 | 1.2 | Circular, distributed in an array | 12 | 0.75:1 | 1.3 | 15.3 | 1207 | 1242 | 1.35 | 165.2 | 308 |
| Comparati ve example 1 | 1 | 1.2 | / | / | / | 1.1 | 15.1 | 1059 | 1197 | 0.98 | 200.7 | 187 |

## Claims

1. A separator, wherein the separator comprises a first porous substrate, a second porous substrate, and a first functional layer located between the first porous substrate and the second porous substrate, the first functional layer comprises graphene oxide, and the first functional layer is provided with a through hole penetrating in a thickness direction of the first functional layer.

2. The separator according to claim 1, wherein a thickness of the first functional layer is less than or equal to 10 µm, and optionally ranges from 0.5 µm to 5 µm.

3. The separator according to claim 1 or 2, wherein a ratio of a total area of the through hole to a total area of the first functional layer ranges from (0.50 to 0.85):1, and optionally ranges from (0.60 to 0.82):1.

4. The separator according to any one of claims 1 to 3, wherein the through hole has a continuous pattern, and optionally, the continuous pattern is a reciprocating bending pattern.

5. The separator according to any one of claims 1 to 3, wherein a plurality of through holes are provided and are distributed discretely, and optionally, the plurality of through holes are distributed in a discrete array.

6. The separator according to claim 5, wherein
a hole spacing between two adjacent through holes ranges from 0.5 µm to 10 µm, and optionally ranges from 0.7 µm to 5 µm; and/or
an equivalent circular diameter of the through hole ranges from 5 µm to 25 µm, and optionally ranges from 8 µm to 17 µm; and/or
a pattern of the through hole comprises one or more of a circle, an ellipse, an oblong, a polygon, a sector, an I shape, and a motif.

7. The separator according to any one of claims 1 to 6, wherein
a volume distribution particle size Dv50 of the graphene oxide ranges from 0.01 µm to 5 µm, and optionally ranges from 0.05 µm to 3 µm; and/or
the graphene oxide has a lamellar structure; and/or
a thickness of a sheet of the graphene oxide is less than or equal to 4 nm, and optionally ranges from 1 nm to 2 nm.

8. The separator according to any one of claims 1 to 7, wherein
a thickness ratio of the first porous substrate to the first functional layer ranges from 1:(0.1 to 0.9), and optionally ranges from 1:(0.1 to 0.5); and/or
a thickness ratio of the second porous substrate to the first functional layer ranges from 1:(0.1 to 0.9), and optionally ranges from 1:(0.1 to 0.5).

9. The separator according to any one of claims 1 to 8, wherein
a thickness of the first porous substrate ranges from 2 µm to 15 µm, and optionally ranges from 3 µm to 10 µm; and/or
a thickness of the second porous substrate ranges from 2 µm to 15 µm, and optionally ranges from 3 µm to 10 µm; and/or
a thickness ratio of the first porous substrate to the second porous substrate ranges from (0.8 to 1.05):(0.8 to 1.06), and optionally ranges from (0.9 to 1.03):(0.9 to 1.04); and/or
a total thickness of the separator ranges from 5 µm to 25 µm, and optionally ranges from 8 µm to 18 µm.

10. The separator according to any one of claims 1 to 9, wherein the first functional layer further comprises a non-particle binder;
optionally, the non-particle binder comprises one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyvinyl alcohol, polyacrylic acid, polyurethane, carboxymethyl cellulose, and styrene-butadiene rubber emulsion; and
optionally, content of the non-particle binder in the first functional layer ranges from 2% to 15%, and more optionally ranges from 3% to 10%, based on a total weight of the first functional layer.

11. The separator according to any one of claims 1 to 10, wherein the first functional layer further comprises first inorganic particles;
optionally, the first inorganic particles comprise one or more of inorganic particles capable of transporting active ions and inorganic particles having a dielectric constant of 5 or more;
optionally, a volume distribution particle size Dv50 of the first inorganic particles ranges from 0.2 µm to 5 µm, and more optionally ranges from 1 µm to 3 µm; and
optionally, content of the first inorganic particles in the first functional layer ranges from 2% to 15%, and more optionally ranges from 5% to 10%, based on the total weight of the first functional layer.

12. The separator according to any one of claims 1 to 11, wherein the through hole is obtained by one or more of a phase separation process, a photoetching process, and a plasma etching process.

13. The separator according to any one of claims 1 to 12, wherein the through hole is obtained by an etching process using laser light;
optionally, a wavelength of the laser light ranges from 100 nm to 2000 nm, and more optionally ranges from 300 nm to 1500 nm; and/or
optionally, a power of the laser light ranges from 1 W to 15 W, and more optionally ranges from 2 W to 10 W; and/or
optionally, a cutting speed of a spot of the laser light ranges from 20 mm/s to 70 mm/s, and more optionally ranges from 40 mm/s to 60 mm/s; and/or
optionally, a pulse width of a generator of the laser light ranges from 2 ps to 20 ps, and more optionally ranges from 5 ps to 15 ps; and/or
optionally, a light-emitting time of the laser light ranges from 2 ms/via to 6 ms/via.

14. The separator according to any one of claims 1 to 13, wherein
the first porous substrate comprises one or more of polyolefin, halogenated polyolefin, polyamide, polyester, and respective derivatives thereof; and/or
the second porous substrate comprises one or more of polyolefin, halogenated polyolefin, polyamide, polyester, and respective derivatives thereof.

15. The separator according to any one of claims 1 to 14, wherein the separator further comprises a second functional layer located on the first porous substrate and/or a surface of the second porous substrate away from the first functional layer, and the second functional layer comprises one or more of second inorganic particles and organic particles;
optionally, the second inorganic particles comprise one or more of inorganic particles capable of transporting active ions and inorganic particles having a dielectric constant of 5 or more; and/or
optionally, the organic particles comprise one or more of polyvinylidene fluoride particles, polytetrafluoroethylene particles, vinylidene fluoride-tetrafluoroethylene-propylene terpolymer particles, vinylidene fluoride-hexafluoropropylene-tetrafluoroethylene terpolymer particles, and tetrafluoroethylene-hexafluoropropylene copolymer particles.

16. The separator according to any one of claims 1 to 15, wherein the separator meets at least one of the following conditions (1) to (6):
(1) an ionic conductivity of the separator at 25°C ranges from 0.8 mS•cm⁻¹ to 2.8 mS•cm⁻¹, and optionally ranges from 1.0 mS•cm⁻¹ to 2.5 mS•cm⁻¹;
(2) an air resistance of the separator ranges from 100 s/100 ml to 400 s/100 ml, and optionally ranges from 120 s/100 ml to 200 s/100 ml;
(3) a tensile strength in a transverse direction of the separator is greater than or equal to 1000 kgf/cm², and optionally ranges from 1100 kgf/cm² to 1600 kgf/cm²;
(4) a tensile strength in a longitudinal direction of the separator is greater than or equal to 900 kgf/cm², and optionally ranges from 1000 kgf/cm² to 1600 kgf/cm²;
(5) a puncture strength of the separator ranges from 9.0 N•µm⁻¹ to 15 N•µm⁻¹, and optionally ranges from 9.5 N•µm⁻¹ to 12 N•µm⁻¹; and
(6) a porosity of the separator ranges from 40% to 80%, and optionally ranges from 45% to 76%.

17. A battery cell, comprising the separator according to any one of claims 1 to 16.

18. The battery cell according to claim 17, wherein the battery cell comprises at least one of a lithium-ion battery cell, a sodium-ion battery cell, a lithium metal battery cell, a sodium metal battery cell, a lithium-sulfur battery cell, a sodium-sulfur battery cell, a lithium-air battery cell, and a sodium-air battery cell.

19. A battery, comprising the battery cell according to claim 17 or 18 and a box body accommodating the battery cell.

20. A power consuming apparatus, comprising the battery according to claim 19.
